# EUROPÄISCHE PATENTSCHRIFT

(11) **EP 3 946 743 B1**
(45) Veröffentlichungstag und Bekanntmachung des Hinweises auf die Patenterteilung: **21.05.2025**
(21) Anmeldenummer: 20718778.2
(22) Anmeldetag: 30.03.2020
(51) Int. Cl.: B02C 18/30, B02C 18/38, A22C 17/00

(54) **ZERKLEINERUNGSVORRICHTUNG FÜR LEBENSMITTEL**
COMMINUTING DEVICE FOR FOODSTUFFS
DISPOSITIF DE BROYAGE POUR DENRÉES ALIMENTAIRES

(30) Priorität: 01.04.2019 DE 102019002341
(43) Veröffentlichungstag der Anmeldung: 09.02.2022
(73) Patentinhaber: SEPAmatic GmbH, 51491 Overath (DE)
(72) Erfinder: VON DER WEIDEN, Helmut, 67824 Feilbingert (DE); ACHENBACH, Mark Dennis, 35216 Biedenkopf (DE)
(74) Vertreter: Straubel, Dirk
(86) Internationale Anmeldenummer: PCT/IB2020/053012
(87) Internationale Veröffentlichungsnummer: WO 2020/201988

(56) Entgegenhaltungen:
- EP-A1- 0 573 759
- CN-U- 204 362 836
- DE-A1- 19 501 966
- SU-A3- 1 788 882
- US-E- R E32 060

## Beschreibung

Die Erfindung betrifft eine Zerkleinerungsvorrichtung für Lebensmittel mit den im Oberbegriff des Anspruchs 1 stehenden Merkmalen.

Für die Zerkleinerung von Lebensmitteln wie zum Beispiel Fleisch, Fisch, Käse oder Fett wurden in der Vergangenheit häufig so genannte Wölfe eingesetzt, die mittels eines rotierenden Messer die gesamte beaufschlagte Menge des Lebensmittels zerkleinern.

Entsprechende Fleischwölfe sind in der DE 43 41 606 A1, der EP 0 573 759 A1 und der DE 195 01 966 A1 beschrieben, welche jeweils einen Aufgabetrichter für das zu zerkleinernde Lebensmittel sowie eine Transportschnecke aufweisen, die das zu zerkleinernde Lebensmittel aus dem Aufgabetrichter abzieht und an eine Hauptschnecke übergibt. Die Hauptschnecke führt das zu zerkleinernde Lebensmittel einem mehrere Messer umfassenden Messersatz zu. Der wesentliche Nachteil der Fleischwölfe liegt darin, dass unerwünschte Reststoffe wie Knochensplitter, Sehnen und mitunter auch zerkleinerte Fremdstoffe in das verkaufsfertige Produkt gelangen. Darüber hinaus hat sich als nachteilig herausgestellt, dass das zu zerkleinernden Lebensmittels im Übergangsbereich der Transportschnecke zur Hauptschnecke erhebliche Umwälzungen vollzieht, wodurch sich der Füllungsgrad des Zerkleinerungsmoduls und die Gesamtleistung der Zerkleinerungsvorrichtung verringert. Überdies gestaltet sich die Reinigung des Übergangs von Transport- und Hauptschnecke in einem kaum zugänglichen Bereich als besonders umständlich, was wiederum zu langen Reinigungspausen und einer weiteren Reduzierung der Gesamtschneidleistung führt.

Bereits seit längerer Zeit bestehen Bestrebungen, zusammen mit der Zerkleinerung eine Separation der unerwünschten Reststoffe von dem verwertbaren Lebensmittel herbeizuführen. Eine Zerkleinerungsvorrichtung zum Herstellen eines knochenlosen Fleischproduktes beschreibt die US Re. 32,060. Die bekannte Vorrichtung weist ein Druckgehäuse mit einer zylindrischen Trommelwand auf, in welcher eine Förderschnecke drehbar gelagert ist. Die Förderschnecke besteht aus einer Transportschnecke und einer drehfest damit verbundenen Hauptschnecke, die sich hinsichtlich ihres Durchmessers, ihrer Steigung und Formgebung des jeweiligen Schneckenganges unterscheiden. Verwertbares Fleisch wird mittels der Hauptschnecke und in der zylindrischen Trommelwand angeordneten Schneidöffnungen von den Knochen separiert und durch die Schneidöffnungen hindurchgedrückt. Nicht verwertbare Knochen werden in Richtung einer endseitig angeordneten Ausschuböffnung gefördert und dort aus dem Druckgehäuse abgeführt. Als nachteilig hat sich jedoch herausgestellt, dass Drehzahl und Drehmoment der Transportschnecke und Hauptschnecke nur einheitlich einstellbar und dadurch die Schneidleistung insbesondere der Hauptschnecke begrenzt ist.

Die EP 2 783 572 B1 offenbart eine Zerkleinerungsvorrichtung mit einer Transportschnecke und einer Hauptschnecke, die jeweils in separaten Gehäusen versetzt zueinander angeordnet sind. Das zu zerkleinernde Lebensmittel gelangt aus dem Gehäuse der Transportschnecke über ein S-förmig gebogenes Verbindungsrohr in das mit Schneidöffnungen versehende Gehäuse der Hauptschnecke, in welchem die Zerkleinerungsarbeit des Lebensmittels erfolgt. Die Transportschnecke und die Hauptschnecke verfügen jeweils über einen eigenen Motor. Im Betrieb hat sich jedoch als nachteilig erwiesen, dass das Lebensmittel von der Transportschnecke über einen verhältnismäßig langen Weg durch das S-förmige Verbindungsrohr gedrückt werden muss, wodurch erhebliche Reibungsverluste und Umwälzwiderstände zu überwinden sind, welche sich negativ aus die Schneidleistung und Standzeit der Zerkleinerungsvorrichtung auswirken.

Die CN 204362836 U offenbart eine Zerkleinerungsvorrichtung mit einem Aufgabetrichter, durch dessen unteren Abschnitt eine Transportschneckenwelle und eine koaxial darin ausgerichtete Hauptschneckenwelle verlaufen. Die Hauptschneckenwelle setzt sich in axialer Richtung der Transportschneckenwelle bis in ein Zerkleinerungsmodul fort. Die Transportschneckenwelle und die Hauptschneckenwelle sind auf einer ersten Seite im Bereich des Aufgabetrichters und auf einer gegenüberliegenden, zweiten Seite endseitig an dem Zerkleinerungsmodul gelagert. Beide Lagerstellen sind dadurch in axialer Richtung sehr weit zueinander beabstandet, woraus in der Praxis der Nachteil resultiert, dass bei einer großen Aufgabemenge des zu zerkleinernden Lebensmittels die Transportschneckenwelle und die Hauptschneckenwelle in Schwingung geraten und die Zerkleinerungsvorrichtung nur mit gedrosselter Schneidleistung betrieben werden kann. Überdies erreicht die bekannte Zerkleinerungsvorrichtung aufgrund der hohen Schwingungsbelastung nur eine verhältnismäßig geringe Standzeit.

Der Erfindung lag daher die Aufgabe zugrunde, eine Zerkleinerungsvorrichtung zu entwickeln, die eine noch höhere Schneidleistung des zu zerkleinernden Lebensmittels ermöglicht.

Die Aufgabe wird mit den Merkmalen des Anspruchs 1 gelöst. Die Transportschnecke und die Hauptschnecke fluchten typischerweise in axialer Richtung miteinander. Die Transportschnecke dient dazu, das zu zerkleinernde Lebensmittel an die Hauptschnecke heranzuführen und übernimmt keine Zerkleinerungsarbeit. Da keine Zerkleinerungsarbeit von der Transportschnecke zu verrichten ist und ein verhältnismäßig geringer Druck auf das zu zerkleinernde Lebensmittel ausgeübt wird, braucht lediglich ein verhältnismäßig geringes Drehmoment bereitgestellt zu werden. Regelmäßig ist der Außendurchmesser der Transportschnecke größer gewählt als der Außendurchmesser der Hauptschnecke. Deren Hauptschneckengang kann vorzugsweise in einem Abschnitt innerhalb der Schneidtrommel an der Hauptschneckenwelle ausgebildet sein und das zu zerkleinernde Lebensmittel mit hohem Druck über und in die radial in der Schneidtrommel ausgeformten Schneidöffnungen transportieren.

Die Transportschneckenmotoreinheit und die Hauptschneckenmotoreinheit sind vorzugsweise getrennt steuerbar und jeweils auf den zu erwartenden Leistungsbedarf ausgelegt. Mit Hilfe der Hauptschneckenmotoreinheit kann die Hauptschnecke mit einer von der Transportschnecke abweichenden Drehzahl und einem darauf ausgelegten Drehmoment betrieben sein. Ein weiterer Vorteil der Erfindung besteht darin, aufgrund der Transportschneckenmotoreinheit und der dazu separaten Hauptschneckeneinheit mit geringem Aufwand insgesamt eine höhere Antriebsleistung installieren und insgesamt den Lebensmitteldurchsatz erheblich steigern zu können.

Die Hauptschneckenwelle ist koaxial zu der Transportschneckenwelle angeordnet und von dieser umschlossen. Aufgrund dieser konstruktiven Ausgestaltung verläuft außerhalb des Zerkleinerungsmoduls ein Abschnitt der Hauptschneckenwelle zentrisch innerhalb der Transportschneckenwelle. Unter dem Merkmal "umschlossen" ist eine Umhüllung oder Überdeckung in axialer Richtung der Hauptschneckenwelle durch die Transportschneckenwelle gemeint, wobei innerhalb des Aufgabetrichters bis zu dem daran angebrachten Zerkleinerungsmodul kein Eintritt des zu zerkleinernden Lebensmittels in radialer Richtung durch die Transportschneckenwelle zu der Hauptschneckenwelle möglich ist. Hierdurch erfährt das zu zerkleinernde Lebensmittel eine Rotation bei gleichzeitigem Vorschub ausschließlich durch die Transportschnecke. Die Hauptschneckenwelle überträgt im Bereich des Aufgabetrichters keine Arbeit auf das zu zerkleinernde Lebensmittel, so dass dieses mit reduzierter Walkarbeit in das Zerkleinerungsmodul gelangt und eine besonders hohe Schneidleistung der Zerkleinerungsvorrichtung möglich ist. Aufgrund des axialen Umschließens der Hauptschneckenwelle von der Transportschneckenwelle ist diese von dem zu zerkleinernden Lebensmittel evakuiert und braucht in dem besonders schwer zugänglichen Bereich am Ausgang des Aufgabetrichters nicht gereinigt zu werden.

Darüber hinaus ist es möglich, die Transportschnecke und die Hauptschnecke in axialer Richtung hintereinander und in einer Ebene anzuordnen, so dass das zu zerkleinernde Lebensmittel geradlinig ohne Umlenkungen der Schneidtrommel zugeführt wird, wodurch Reibungsverluste des zu zerkleinernden Lebensmittels minimiert sind. Dieses wiederum sorgt für einen hohen Durchsatz des zu zerkleinernden Lebensmittels, da das von der Transportschnecke und der Hauptschnecke aufgebrachte Drehmoment für eine Maximierung der Schneidleistung zur Verfügung steht.

Die Transportschnecke und die Hauptschneckenwelle verlaufen zumindest abschnittsweise durch den Aufgabetrichter. Unter einem Aufgabetrichter wird ein wannenartiger Behälter mit einer oberen Öffnung verstanden, durch welche das zu zerkleinernde Lebensmittel der Zerkleinerungsvorrichtung zugeführt wird. Die Transportschnecke verläuft durch das untere Ende des Aufgabetrichters und zieht von dort in dem Aufgabetrichter befindliches, zu zerkleinerndes Lebensmittel ab. Innerhalb des durch den Aufgabetrichter verlaufenden Abschnittes der Transportwelle ist die Hauptschneckenwelle von der Transportschneckenwelle aufgenommen und von dem Aufgabetrichter evakuiert. Dieses hat außerdem den Vorteil, dass das zu zerkleinernde Lebensmittel beim Betrieb der Zerkleinerungsvorrichtung weder durch von der Hauptschneckenwelle stammende Schmierstoffreste noch durch Abrieb kontaminiert ist.

Besonders bevorzugt ist eine Ausführungsform, bei welcher ausschließlich die Hauptschneckenwelle der Hauptschnecke von der Transportschneckenwelle umschlossen ist. Demnach sind innerhalb des von der Transportschneckenwelle überdeckten Bereiches der Hauptschneckenwelle keine Abschnitte des Hauptschneckenganges vorhanden. Der Außendurchmesser der Hauptschneckenwelle ist derart auf den Innendurchmesser der Transportschneckenwelle abgestimmt, dass unter den zu erwartenden betrieblichen Lasten keine Kontaktierung erfolgt und ein zwischen Transportschneckenwelle und Hauptschneckenwelle ausgebildeter Ringraum minimiert ist. Hieraus resultiert der Vorteil, dass ein freier Querschnitt für das zu zerkleinernde Lebensmittel zwischen der Transportschneckenwelle und einer Durchtrittsöffnung zu dem Zerkleinerungsmodul besonders groß sein kann, wodurch eine noch höhere Schneidleistung der Zerkleinerungsvorrichtung möglich ist.

Zweckmäßigerweise ist die Transportschneckenwelle in axialer Erstreckung über ihre gesamte axiale Länge als geschlossener Rohrkörper ausgebildet. Dieser braucht keine einstückig integrale Baueinheit zu sein, überdeckt aber die Hauptschneckenwelle ohne eine Durchtrittsöffnung für das zu zerkleinernde Lebensmittel.

Es hat sich als besonders günstig herausgestellt, wenn die Transportschneckenmotoreinheit und die Hauptschneckenmotoreinheit auf einer bezüglich des Zerkleinerungsmoduls abgewandten Seite der Transportschnecke angeordnet sind. Hierdurch erfolgt eine modulartige Trennung der Funktionsbereiche Lebensmittelzerkleinerung und Antriebstechnik. Die Transportschneckenmotoreinheit und Hauptschneckenmotoreinheit können benachbart zueinander angeordnet sein und sind dadurch für Wartungszwecke besonders gut zugänglich. Auch kann das Verlegen von elektrischen Leitungen auf einen räumlich abgegrenzten Bereich reduziert sein, der beabstandet zu dem zu zerkleinernden Lebensmittel angeordnet ist und bei Reinigungsarbeiten einer deutlich verringerten Belastung durch Spritzwasser ausgesetzt ist. Darüber hinaus bleibt der Bauraum rings um das Zerkleinerungsmodul weitgehend frei, so dass sowohl das verwertbare Lebensmittel als auch die nicht verwertbaren Reststoffe mittels jeweils weitgehend beliebig anzuordnender, nachgeschalteter Fördermittel abtransportiert werden können.

Der Aufgabetrichter weist an gegenüberliegenden Seiten eine erste und zweite Durchtrittsöffnung auf, durch welche die Transportschneckenwelle und die Hauptschneckenwelle hindurchgeführt sind. Dabei kann die erste Durchtrittsöffnung auf einer der Transportschneckenmotoreinheit und der Hauptschneckenmotoreinheit benachbarten Seite des Aufgabetrichters angeordnet sein und ausschließlich dem Durchtritt der Transportschneckenwelle und der darin gelagerten Hauptschneckenwelle dienen. Die zweite Durchtrittsöffnung ist dann auf einer dem Zerkleinerungsmodul benachbarten Seite des Aufgabetrichters angeordnet. In die zweite Durchtrittsöffnung reicht regelmäßig die Transportschneckenwelle mit dem daran ausgebildeten Transportschneckengang hinein. Überdies bildet die zweite Durchtrittsöffnung einen Kanal für das zu zerkleinernde Lebensmittel von dem Aufgabetrichter zu dem Zerkleinerungsmodul.

Vorzugsweise ist das Zerkleinerungsmodul stirnseitig um die zweite Durchtrittsöffnung befestigt. Das zu zerkleinernde Lebensmittel gelangt unmittelbar von der zweiten Durchtrittsöffnung in das Zerkleinerungsmodul, welches in fluchtender Verlängerung zu der zweiten Durchtrittsöffnung ausgerichtet ist, wodurch das zu zerkleinernde Lebensmittel geradlinig und ohne Umlenkung in das Zerkleinerungsmodul eintritt.

Zweckmäßigerweise sind die Transportschneckenwelle und die Hauptschneckenwelle in einem gemeinsamen Lagerbock gelagert. Hierdurch wird der Bauraum in axialer Erstreckung der Transportschneckenwelle und Hauptschneckenwelle minimiert. Der gemeinsame Lagerbock kann dabei ortsfest zu dem Aufgabetrichter und räumlich zwischen diesem und der zugehörigen Transportschneckenmotoreinheit und der Hauptschneckenmotoreinheit angeordnet sein.

Sinnvollerweise sind in axialer Erstreckung des Lagerbocks die Transportschneckenwelle mittels mehrerer erster Transportschneckenlager gegenüber dem Lagerbock und die Hauptschneckenwelle mittels mindestens eines ersten Hauptschneckenlagers gegenüber der Transportschneckenwelle drehbar abgestützt. Das Transportschneckenlager und das Hauptschneckenlager sind dadurch innerhalb des Lagerbocks angeordnet und übertragen die auftretenden Betriebslasten sowohl in radialer Richtung als auch in axialer Richtung auf den Lagerbock. Dieses hat den Vorteil, dass auf der Seite des Zerkleinerungsmoduls keine nennenswerten Axialkräfte abzufangen sind und entsprechend konstruktiv gering dimensionierte und einfach aufgebaute Lager verwendet werden können, wodurch ein Ein- und Ausbau des Zerkleinerungsmoduls insbesondere für Reparatur- und Reinigungszwecke besonders schnell möglich ist.

Vorzugsweise sind die ersten Transportschneckenlager und das mindestens eine erste Hauptschneckenlager als Wälzlager ausgebildet. Wälzlager zeichnen sich durch eine geringe Lagerreibung und eine hohe Standzeit aus. Eine unter Umständen aufwendige Demontage des ersten Transportschneckenlagers und des ersten Hauptschneckenlagers braucht lediglich im Reparaturfall zu erfolgen, da der dem ersten Transportschneckenlager und dem ersten Hauptschneckenlager benachbarte Abschnitt der Transportschneckenwelle und Hauptschneckenwelle für Reinigungsarbeiten nicht entfernt zu werden braucht.

Die Transportschneckenwelle kann an dem Lagerbock eine Transportschneckentrennstelle und die Hauptschneckenwelle eine Hauptschneckentrennstelle aufweisen. An dieser Stelle lassen sich die entsprechenden Wellen vor dem Lagerbock trennen und in axialer Richtung aus dem Aufgabetrichter in Richtung der zweiten Durchtrittsöffnung herausziehen.

Vorteilhafterweise ist der Lagerbock an einer Außenseite des Aufgabetrichters rings um die erste Durchtrittsöffnung angeordnet. Der Lagerbock ist folglich außerhalb des Aufgabetrichters angebracht und tritt nicht in Kontakt mit dem zu zerkleinernden Lebensmittel. Diese Einbaulage des Lagerbockes ist insbesondere vorteilhaft, wenn das erste Transportschneckenlager und das erste Hauptschneckenlager als Wälzlager ausgebildet sind, da andernfalls eine zusätzliche Abdichtung des Lagerbocks gegen eintretendes Lebensmittel und/oder den Austritt von Schmiermittel vorgesehen sein müsste.

In die zweite Durchtrittsöffnung ist ein Zentriereinsatz eingesetzt, in welchem die Transportschneckenwelle mittels eines zweiten Transportschneckenlagers und die Hauptschneckenwelle mittels eines zweiten Hauptschneckenlagers drehbar abgestützt sind. Der Zentriereinsatz nimmt in seinem zentralen Bereich das zweite Transportschneckenlager und das zweite Hauptschneckenlager auf. Dezentral sind in dem Zentriereinsatz in axialer Richtung offene Durchbrüche ausgeformt, durch welche das zu zerkleinernde Lebensmittel aus der zweiten Durchtrittsöffnung austritt und in das daran angreifende Zerkleinerungsmodul eintritt.

Günstigerweise sind das zweite Transportschneckenlager und das zweite Hauptschneckenlager als Gleitlager ausgebildet. Das Gleitlager kann schmierungsfrei ausgeführt sein, ist im Betrieb weitgehend unempfindlich gegen eindringendes Lebensmittel, so dass keine separate Abdichtung notwendig ist, und lässt sich für Reinigungszwecke einfach entfernen beziehungsweise zerlegen.

Vorzugsweise umfasst das Zerkleinerungsmodul eine Vorzerkleinerungstrommel, welche in axialer Richtung zwischen der Schneidtrommel und der zweiten Durchtrittsöffnung angeordnet ist. Die Vorzerkleinerungstrommel dient dazu, das Lebensmittel grob zu zerreißen und auf die nachfolgende Zerkleinerung und Separation vorzubereiten. Die Vorzerkleinerungstrommel weist hierfür eine geschlossene Umfangswand auf, durch welche kein zu zerkleinerndes Lebensmittel hindurchtritt.

Auf einer Innenseite der Vorzerkleinerungstrommel können Felder und Züge ausgebildet sein, mittels derer eine grobe Zerkleinerung erfolgt. Die Züge sind als helixförmige Nut ausgeformt und durchsetzen die Felder in Richtung der Schneidtrommel. Das zu zerkleinernde Lebensmittel wird von der drehenden Hauptschnecke in die Züge gedrückt, ist in den Zügen fixiert und wird sodann von dem über die Züge hinwegstreichenden Hauptschneckengang der drehenden Hauptschneckenwelle abgeschert.

Zum besseren Verständnis wird die Erfindung nachfolgend anhand von vier Figuren näher erläutert. Es zeigen die
- **Fig. 1:**: eine perspektivische Ansicht von hinten auf eine in Längsrichtung geschnittene Zerkleinerungsvorrichtung;
- **Fig. 2:**: eine perspektivische Seitenansicht von vorne auf die Zerkleinerungsvorrichtung gemäß Fig. 1;
- **Fig. 3:**: einen vergrößerten Ausschnitt eines Längsschnittes durch die Zerkleinerungsvorrichtung im Bereich eines Lagerbockes und
- **Fig. 4:**: einen vergrößerten Ausschnitt eines Längsschnittes durch die Zerkleinerungsvorrichtung im Bereich eines Zerkleinerungsmoduls.

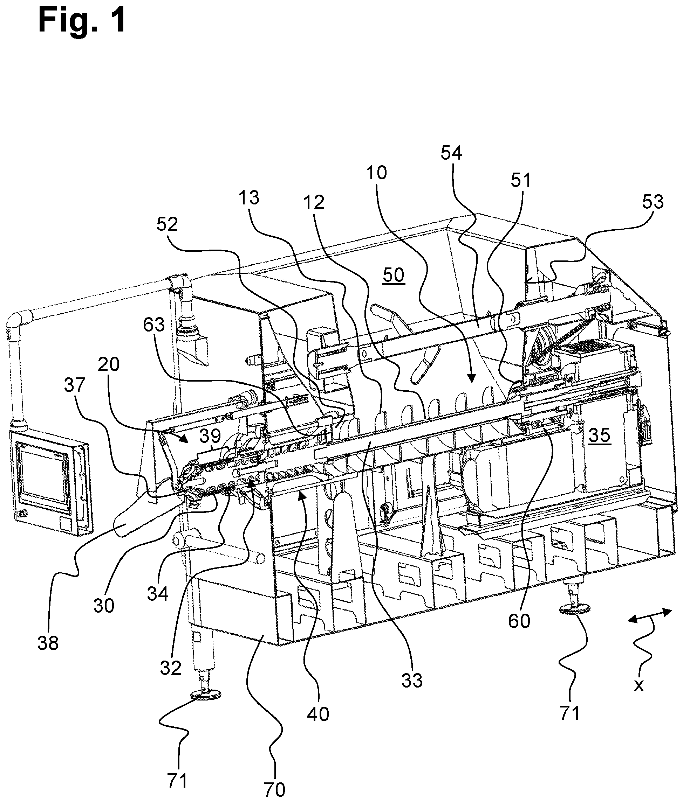

Die Fig. 1 zeigt in einer perspektivischen Ansicht einen Längsschnitt durch die erfindungsgemäße Zerkleinerungsvorrichtung, die einen Maschinenrahmen 70 aufweist, der mittels mehrerer daran befestigter Stützfüße 71 ortsfest auf dem Boden abgestellt ist. Der Maschinenrahmen 70 trägt einen nach oben offenen Aufgabetrichter 50, in welchen das zu zerkleinernde Lebensmittel eingelegt und von einer durch den Aufgabetrichter hindurchlaufenden Mischwelle 54 vergleichmäßigt und aufgelockert wird.

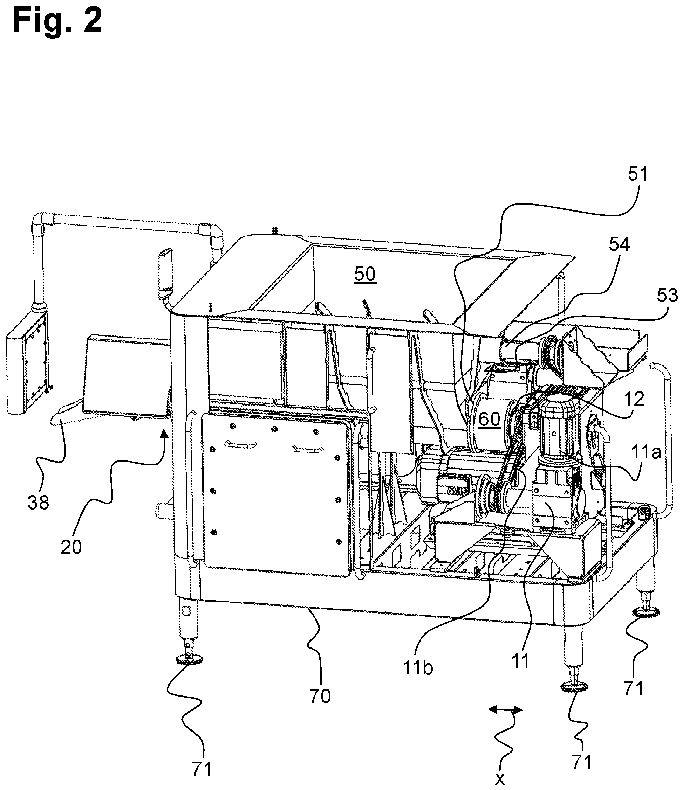

An einem unteren Ende des Aufgabetrichters 50 befindet sich eine Transportschnecke 10, mit welcher das zu zerkleinernde Lebensmittel einem Zerkleinerungsmodul 20 zugeführt wird. Das Zerkleinerungsmodul 20 ist in axialer Richtung x abströmseitig der Transportschnecke 10 angeordnet. Die Transportschnecke 10 umfasst eine Transportschneckenwelle 12 und einen Transportschneckengang 13, wobei die Transportschneckenwelle 12 durch eine in dem Aufgabetrichter 50 ausgeformte erste Durchtrittsöffnung 51 hindurchgeführt und mit einer Transportschneckenmotoreinheit 11 gekoppelt ist, die besonders gut in Fig. 2 zu erkennen ist. In einer zweiten Durchtrittsöffnung 52, die bezüglich der ersten Durchtrittsöffnung 51 auf der gegenüberliegenden Seite des Aufgabetrichters 50 angeordnet ist, gelangt das zu zerkleinernde Lebensmittel in das Zerkleinerungsmodul 20. In die zweite Durchtrittsöffnung 52 ist ein Zentriereinsatz 63 eingesetzt.

Das Zerkleinerungsmodul 20 weist endseitig eine zylindrische Schneidtrommel 30 mit einer Vielzahl von radial darin ausgerichteten Schneidöffnungen 31 auf. In axialer Richtung x ist das Zerkleinerungsmodul 20 von einer Hauptschnecke 32 durchsetzt, deren Hauptschneckengang 34 über die Schneidöffnungen 31 hinwegdreht. Durch eine Rotation der Hauptschnecke 32 schiebt der Hauptschneckengang 34 das zu zerkleinernde Lebensmittel in Richtung einer Austragsöffnung 37, durch welche die im Lebensmittel enthaltenen Reststoffe aus dem Zerkleinerungsmodul 20 austreten und mittels einer Reststoffrutsche 38 abgeführt werden.

Das zu verwertende Lebensmittel ist verhältnismäßig weicher und wird aufgrund des von der Hauptschnecke 32 aufgebauten Druckes in die Schneidöffnungen 31 gepresst, darin gehalten und aufgrund der Drehbewegung des Hauptschneckenganges 34 abgeschert. Ein Lebensmittelaustrag 39 erfolgt durch die Schneidöffnungen 31.

Die Hauptschnecke 32 übernimmt die Zerkleinerungsarbeit und weist hierfür eine separate Hauptschneckenmotoreinheit 35 auf, die mit einer Hauptschneckenwelle 33 kinematisch gekoppelt ist. Die Hauptschneckenwelle 33 erstreckt sich in axialer Richtung durch das Zerkleinerungsmodul 20 und ist ausschließlich in diesem Abschnitt mit dem Hauptschneckengang 34 ausgebildet. In der zweiten Durchtrittsöffnung 52 tritt die Hauptschneckenwelle 33 koaxial in das Innere der hohlen Transportschneckenwelle 12 ein und durchläuft diese über deren gesamte axiale Länge. Innerhalb des Aufgabetrichters 50 ist die Hauptschneckenwelle 33 von der Transportschneckenwelle 12 aufgenommen und von dieser vollständig umgeben.

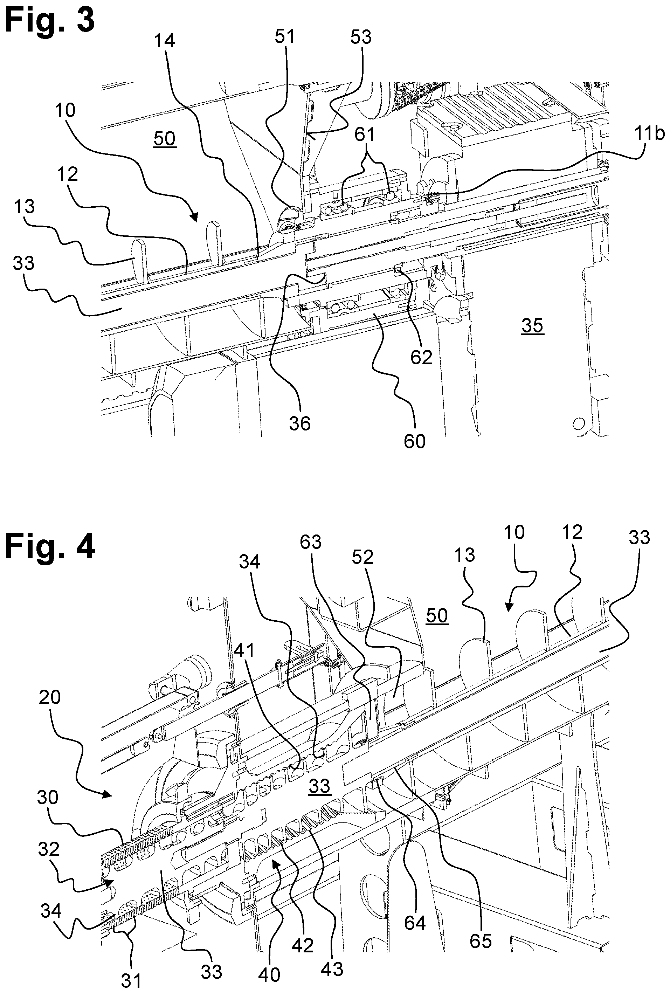

Die Fig. 3 verdeutlicht in einer vergrößerten Ansicht den Durchtritt der Transportschneckenwelle 12 und der darin gelagerten Hauptschneckenwelle 33 durch die erste Durchtrittsöffnung 51 des Aufgabetrichters 50. An einer Außenseite 53 des Aufgabetrichters 50 ist fluchtend mit der ersten Durchtrittsöffnung 51 ein Lagerbock 60 angeordnet, der die radialen und axialen Kräfte sowohl der Transportschneckenwelle 12 als auch der Hauptschneckenwelle 33 aufnimmt. Hierfür weist der Lagerbock 60 mehrere in axialer Richtung x hintereinander angeordnete erste Transportschneckenlager 61 auf, welche von außen an der Transportschneckenwelle 12 angreifen. Die Hauptschneckenwelle 33 ist gegenüber der Transportschneckenwelle 12 mit einem ersten Hauptschneckenlager 62 abgestützt, welches ebenfalls in axialer Richtung x von dem Lagerbock 60 übergriffen ist.

Die Transportschneckenwelle 12 ist auf der bezüglich des Aufgabetrichters 50 abgewandten Seite des Lagerbockes 60 aus diesem herausgeführt und mit der in Fig. 2 zu sehenden Transportschneckenmotoreinheit 11 verbunden. In dem gezeigten Ausführungsbeispiel weist die Transportschneckenmotoreinheit 11 einen Antriebsmotor 11a und ein Kraftübertragungsmittel 11b in Form einer Kette auf, in welche ein ortsfest an der Transportschneckenwelle 12 angeformtes Ritzel eingreift.

Die Hauptschneckenwelle 33 tritt ebenfalls auf der bezüglich des Aufgabetrichters 50 abgewandten Seite aus dem Lagerbock 60 heraus und überragt in axialer Richtung x die Transportschneckenwelle 12. Endseitig ist die Hauptschneckenwelle 33 von der Hauptschneckenmotoreinheit 35 aufgenommen.

Für eine einfache Demontage beispielsweise für Reinigungs- oder Reparaturzwecke weist die Transportschnecke 10 eine Transportschneckentrennstelle 14 und die Hauptschnecke 32 eine Hauptschneckentrennstelle 36 auf. Die Transportschneckentrennstelle 14 ist in unmittelbarer Nähe zu der ersten Durchtrittsöffnung 51 innerhalb des Aufgabetrichters 50 ausgebildet und beim Einsetzen der Transportschnecke 10 in die Zerkleinerungsvorrichtung von oben sichtbar, wodurch das Einsetzen erheblich vereinfacht wird. Die Hauptschneckentrennstelle 36 befindet sich in axialer Richtung x versetzt zu der Transportschneckentrennstelle 14 und ist von außen durch den Lagerblock 60 umgriffen. Die in axialer Richtung x versetzte Anordnung von Transportschneckentrennstelle 14 und Hauptschneckentrennstelle 36 vereinfacht zusätzlich den Einbau, da die Transportschnecke 10 mit darin eingesetzter Hauptschneckenwelle 33 in zusammengesetztem Zustand axial eingeschoben werden können und nacheinander ihre Trennstellen 14, 36 kontaktieren.

Die Fig. 4 zeigt in einer vergrößerten Ansicht die Anbindung des Zerkleinerungsmoduls 20 an die zweite Durchtrittsöffnung 52, in welcher die Transportschneckenwelle 12 mittels eines von dem Zentriereinsatz 63 getragenen, zweiten Transportschneckenlagers 64 drehbar aufgenommen ist. Das zweite Transportschneckenlager 64 ist aus einer Lagerhülse ausgebildet, an deren Außenseite der Zentriereinsatz 63 und die Innenseite der hohlen Transportschneckenwelle 12 anliegt. Die Innenseite der Lagerhülse bildet ein zweites Hauptschneckenlager 65, an welchem die Außenseite der Hauptschneckenwelle 33 abgestützt ist.

Das Zerkleinerungsmodul 20 weist außerdem eine Vorzerkleinerungstrommel 40 auf, die stirnseitig an der Schneidtrommel 30 befestigt ist. Ein der Schneidtrommel 30 abgewandtes Ende der Vorzerkleinerungstrommel 40 greift stirnseitig an der zweiten Durchtrittsöffnung 52 an. Auf einer Innenseite 41 ist die Vorzerkleinerungstrommel 41 mit einer Oberfläche aus Feldern 42 und Zügen 43 versehen. Die Züge 43 bilden eine spiralartig durch die Felder 42 verlaufende Nut und sorgen für eine wellenartige Oberfläche. Der Hauptschneckengang 34 des axial durch das Vorzerkleinerungsmodul 40 verlaufenden Abschnittes der Hauptschnecke 32 transportiert das zu zerkleinernde Lebensmittel in Richtung der Schneidtrommel 30, wobei das zu zerkleinernde Lebensmittel an den Feldern 42 und Zügen 43 eine Vorzerkleinerung erfährt.

### Bezugszeichenliste

- 10: Transportschnecke
- 11: Transportschneckenmotoreinheit
- 11a: Antriebsmotor
- 11b: Kraftübertragungsmittel
- 12: Transportschneckenwelle
- 13: Transportschneckengang
- 14: Transportschneckentrennstelle

- 20: Zerkleinerungsmodul

- 30: Schneidtrommel
- 31: Schneidöffnungen
- 32: Hauptschnecke
- 33: Hauptschneckenwelle
- 34: Hauptschneckengang
- 35: Hauptschneckenmotoreinheit
- 36: Hauptschneckentrennstelle
- 37: Austragsöffnung Reststoff
- 38: Reststoffrutsche
- 39: Lebensmittelaustrag

- 40: Vorzerkleinerungstrommel
- 41: Innenseite Vorzerkleinerungstrommel
- 42: Felder
- 43: Züge

- 50: Aufgabetrichter
- 51: erste Durchtrittsöffnung
- 52: zweite Durchtrittsöffnung
- 53: Außenseite Aufgabetrichter
- 54: Mischwelle

- 60: Lagerbock
- 61: erstes Transportschneckenlager
- 62: erstes Hauptschneckenlager
- 63: Zentriereinsatz
- 64: zweites Transportschneckenlager
- 65: zweites Hauptschneckenlager

- 70: Maschinenrahmen
- 71: Stützfüße

- x: axiale Richtung

## Patentansprüche

1. Zerkleinerungsvorrichtung für Lebensmittel umfassend einen Aufgabetrichter (50), eine durch den Aufgabetrichter (50) zumindest abschnittsweise verlaufende Transportschnecke (10) und ein sich in axialer Richtung (x) der Transportschnecke (10) anschließendes Zerkleinerungsmodul (20), wobei die Transportschnecke (10) eine von einer Transportschneckenmotoreinheit (11) angetriebene Transportschneckenwelle (12) mit einem abschnittsweise daran angeformten Transportschneckengang (13) und das Zerkleinerungsmodul (20) eine Schneidtrommel (30) mit darin ausgebildeten Schneidöffnungen (31) sowie eine in dem Zerkleinerungsmodul (20) drehbar angeordnete Hauptschnecke (32) mit einer von einer Hauptschneckenmotoreinheit (35) angetriebenen Hauptschneckenwelle (33) und einem daran angeformten, die Schneidöffnungen (31) überstreichenden
Hauptschneckengang (34) aufweist, wobei die Hauptschneckenwelle (33) innerhalb des Aufgabetrichters (50) bis zu dem Zerkleinerungsmodul (20) von der Transportschneckenwelle (12) koaxial umschlossen ist und der Aufgabetrichter (50) an gegenüberliegenden Seiten eine erste und zweite Durchtrittsöffnung (51, 52) aufweist, durch welche die Transportschneckenwelle (12) und die Hauptschneckenwelle (33) hindurchgeführt sind,
**dadurch gekennzeichnet,**
**dass** in die zweite Durchtrittsöffnung (52) ein Zentriereinsatz (63) eingesetzt ist, in welchem die Transportschneckenwelle (12) mittels eines zweiten Transportschneckenlagers (64) und die Hauptschneckenwelle (33) mittels eines zweiten Hauptschneckenlagers (65) drehbar abgestützt sind.

2. Zerkleinerungsvorrichtung nach Anspruch 1, **dadurch gekennzeichnet, dass** ausschließlich die Hauptschneckenwelle (33) der Hauptschnecke (32) von der Transportschneckenwelle (12) umschlossen ist.

3. Zerkleinerungsvorrichtung nach Anspruch 1 oder 2, **dadurch gekennzeichnet, dass** die Transportschneckenwelle (12) in axialer Erstreckung als geschlossener Rohrkörper ausgebildet ist.

4. Zerkleinerungsvorrichtung nach einem der Ansprüche 1 bis 3, **dadurch gekennzeichnet, dass** die Transportschneckenmotoreinheit (11) und die Hauptschneckenmotoreinheit (35) auf einer bezüglich des Zerkleinerungsmoduls (20) abgewandten Seite der Transportschnecke (10) angeordnet sind.

5. Zerkleinerungsvorrichtung nach einem der Ansprüche 1 bis 4, **dadurch gekennzeichnet, dass** das Zerkleinerungsmodul (20) stirnseitig um die zweite Durchtrittsöffnung (52) befestigt ist.

6. Zerkleinerungsvorrichtung nach einem der Ansprüche 1 bis 5, **dadurch gekennzeichnet, dass** die Transportschneckenwelle (12) und die Hauptschneckenwelle (33) in einem gemeinsamen Lagerbock (60) gelagert sind.

7. Zerkleinerungsvorrichtung nach Anspruch 6, **dadurch gekennzeichnet, dass** in axialer Erstreckung (x) des Lagerbocks (60) die Transportschneckenwelle (12) mittels mehrerer erster Transportschneckenlager (61) gegenüber dem Lagerbock (60) und die Hauptschneckenwelle (33) mittels mindestens eines ersten Hauptschneckenlagers (62) gegenüber der Transportschneckenwelle (12) drehbar abgestützt sind.

8. Zerkleinerungsvorrichtung nach Anspruch 7, **dadurch gekennzeichnet, dass** die ersten Transportschneckenlager (61) und das mindestens eine erste Hauptschneckenlager (62) als Wälzlager ausgebildet sind.

9. Zerkleinerungsvorrichtung nach einem der Ansprüche 6 bis 8, **dadurch gekennzeichnet, dass** die Transportschneckenwelle (12) an dem Lagerbock (60) eine Transportschneckentrennstelle (14) und die Hauptschneckenwelle (33) eine Hauptschneckentrennstelle (36) aufweist.

10. Zerkleinerungsvorrichtung nach einem der Ansprüche 6 bis 9 soweit auf Anspruch 5 rückbezogen, **dadurch gekennzeichnet, dass** der Lagerbock (60) an einer Außenseite (53) des Aufgabetrichters (50) rings um die erste Durchtrittsöffnung (51) angeordnet ist.

11. Zerkleinerungsvorrichtung nach einem der Ansprüche 1 bis 10, **dadurch gekennzeichnet, dass** das zweite Transportschneckenlager (64) und das zweite Hauptschneckenlager (65) als Gleitlager ausgebildet sind.

12. Zerkleinerungsvorrichtung nach einem der Ansprüche 1 bis 11, **dadurch gekennzeichnet, dass** das Zerkleinerungsmodul (20) eine Vorzerkleinerungstrommel (40) umfasst, welche in axialer Richtung (x) zwischen der Schneidtrommel (30) und der zweiten Durchtrittsöffnung (52) angeordnet ist.

13. Zerkleinerungsvorrichtung nach Anspruch 12, **dadurch gekennzeichnet, dass** auf einer Innenseite (41) der Vorzerkleinerungstrommel (40) Felder (42) und Züge (43) ausgebildet sind.

## Claims

1. A shredder device for foodstuffs comprising a feed hopper (50), a screw conveyor (10) running at least in sections through the feed hopper (50) and a shredder module (20) following the screw conveyor (10) in an axial direction (x), wherein the screw conveyor (10) comprises a screw conveyor shaft (12) driven by a screw conveyor motor unit (11) and having a screw conveyor flight (13) integrally formed thereon in sections, and the shredder module (20) comprises a cutting drum (30) having cutting openings (31) formed therein, and a main screw (32) rotatably arranged in the shredder module (20) having a main screw shaft (33), which is driven by a main screw motor unit (35), and a main screw flight (34), which is formed thereon and passes over the cutting openings (31), wherein the main screw shaft (33) is coaxially enclosed by the screw conveyor shaft (12) inside the feed hopper (50) up to the shredder module (20), and wherein the feed hopper (50) has a first and second passage opening (51, 52) on opposite sides through which the screw conveyor shaft (12) and the main screw shaft (33) are passed, **characterized in that** a centering insert (63) is inserted into the second passage opening (52), in which the screw conveyor shaft (12) is rotatably supported by means of a second screw conveyor bearing (64) and the main screw shaft (33) is rotatably supported by means of a second main screw bearing (65).

2. The shredder device according to claim 1, **characterized in that** only the main screw shaft (33) of the main screw (32) is enclosed by the screw conveyor shaft (12).

3. The shredder device according to claim 1 or 2, **characterized in that** the screw conveyor shaft (12) is designed as a closed tubular body in the axial extension.

4. The shredder device according to one of claims 1 to 3, **characterized in that** the screw conveyor motor unit (11) and the main screw motor unit (35) are arranged on a side of the screw conveyor (10) facing away from the shredder module (20).

5. The shredder device according to one of claims 1 to 4, **characterized in that** the shredder module (20) is fastened on the front side around the second passage opening (52).

6. The shredder device according to one of claims 1 to 5, **characterized in that** the screw conveyor shaft (12) and the main screw shaft (33) are mounted in a common bearing block (60).

7. The shredder device according to claim 6, **characterized in that** within the axial direction (x) of the bearing block (60) the screw conveyor shaft (12) is rotatably supported by means of several first screw conveyor bearings (61) with respect to the bearing block (60) and the main screw shaft (33) is rotatably supported by means of at least one first main screw bearing (62) relative to the screw conveyor shaft (12).

8. The shredder device according to claim 7, **characterized in that** the first screw conveyor bearings (61) and the at least one first main screw bearing (62) are designed as roller bearings.

9. The shredder device according to one of claims 6 to 8, **characterized in that** at the bearing block (60) the screw conveyor shaft (12) has a screw conveyor disconnection point (14) and the main screw shaft (33) has a main screw disconnection point (36).

10. The shredder device according to one of claims 6 to 9 as far as dependent on claim 5, **characterized in that** the bearing block (60) is arranged on an outside (53) of the feed hopper (50) around the first passage opening (51).

11. The shredder device according to one of claims 1 to 10, **characterized in that** the second screw conveyor bearing (64) and the second main screw bearing (65) are designed as slide bearings.

12. The shredder device according to one of claims 1 to 11, **characterized in that** the shredder module (20) comprises a pre-shredding drum (40) which is arranged in the axial direction (x) between the cutting drum (30) and the second passage opening (52).

13. The shredder device according to claim 12, **characterized in that** lands (42) and grooves (43) are formed on an inner side (41) of the pre-shredding drum (40).

## Revendications

1. Dispositif de broyage pour denrées alimentaires comprenant une trémie d'alimentation (50), une vis de transport (10) se prolongeant au moins partiellement à travers la trémie d'alimentation (50) et un module de broyage (20) adjacent à la vis de transport (10) dans la direction axiale (x), dans lequel la vis de transport (10) présente un arbre de vis de transport (12) entraîné par une unité motrice de vis de transport (11) avec un filetage de vis de transport (13) formé sur celui-ci par sections, et le module de broyage (20) présente un tambour de coupe (30) avec des ouvertures de coupe (31) formées à l'intérieur et une vis principale (32) disposée de manière rotative dans le module de broyage (20) avec un arbre de vis principale (33) entraîné par une unité motrice de vis principale (35) et un filetage de vis principale (34) formé sur celui-ci et balayant les ouvertures de coupe (31), dans lequel l'arbre de vis principale (33) est entouré coaxialement par l'arbre de vis de transport (12) à l'intérieur de la trémie d'alimentation (50) jusqu'au module de broyage (20), et la trémie d'alimentation (50) présente sur des côtés opposés une première et une seconde ouverture de passage (51, 52) à travers lesquelles l'arbre de vis de transport (12) et l'arbre de vis principale (33) sont guidés, **caractérisé en ce,**
**qu'**un insert de centrage (63) est inséré dans la seconde ouverture de passage (52), dans laquelle l'arbre de vis de transport (12) est supporté de manière rotative au moyen d'un second palier de vis de transport (64) et l'arbre de vis principale (33) est supporté de manière rotative au moyen d'un second palier de vis principale (65).

2. Dispositif de broyage selon la revendication 1, **caractérisé en ce que** seul l'arbre de vis principale (33) de la vis principale (32) est entouré par l'arbre de vis de transport (12) .

3. Dispositif de broyage selon la revendication 1 ou 2, **caractérisé en ce que** l'arbre de vis de transport (12) est conçu comme un corps tubulaire fermé dans son extension axiale.

4. Dispositif de broyage selon l'une des revendications 1 à 3, **caractérisé en ce que** l'unité motrice de la vis de transport (11) et l'unité motrice de vis principale (35) sont disposées sur un côté de la vis de transport (10) opposé au module de broyage (20).

5. Dispositif de broyage selon l'une des revendications 1 à 4, **caractérisé en ce que** le module de broyage (20) est fixé en extrémité autour de la seconde ouverture de passage (52).

6. Dispositif de broyage selon l'une des revendications 1 à 5, **caractérisé en ce que** l'arbre de vis de transport (12) et l'arbre de vis principale (33) sont montés dans un bloc de palier commun (60).

7. Dispositif de broyage selon la revendication 6, **caractérisé en ce que,** dans le prolongement axial (x) du bloc de palier (60), l'arbre de vis de transport (12) est supporté de manière rotative par l'intermédiaire de plusieurs premiers paliers de vis de transport (61) par rapport au bloc de palier (60) et l'arbre de vis principale (33) est supporté de manière rotative par l'intermédiaire d'au moins un premier palier de vis principale (62) par rapport à l'arbre de vis de transport (12).

8. Dispositif de broyage selon la revendication 7, **caractérisé en ce que** les premiers paliers de vis de transport (61) et l'au moins un premier palier de vis principale (62) sont conçus comme des paliers à roulement.

9. Dispositif de broyage selon l'une des revendications 6 à 8, **caractérisé en ce que** l'arbre de vis de transport (12) présente un point de séparation de vis de transport (14) sur le bloc de palier (60) et l'arbre de vis principale (33) présente un point de séparation de vis principale (36).

10. Dispositif de broyage selon l'une des revendications 6 à 9 dans la mesure où elle dépend de la revendication 5, **caractérisé en ce que** le bloc de palier (60) est disposé sur un côté extérieur (53) de la trémie d'alimentation (50) autour de la première ouverture de passage (51).

11. Dispositif de broyage selon l'une des revendications 1 à 10, **caractérisé en ce que** le second palier de vis de transport (64) et le second palier de vis principale (65) sont conçus comme des paliers lisses.

12. Dispositif de broyage selon l'une des revendications 1 à 11, **caractérisé en ce que** le module de broyage (20) comprend un tambour de pré-broyage (40) qui est disposé dans la direction axiale (x) entre le tambour de coupe (30) et la seconde ouverture de passage (52).

13. Dispositif de broyage selon la revendication 12, **caractérisé en ce que** des champs (42) et des rainures (43) sont formés sur un côté intérieur (41) du tambour de pré-broyage (40).
